# FASCICULE DE BREVET EUROPEEN

(11) **EP 1 461 513 B1**
(45) Date de publication et mention de la délivrance du brevet: **30.08.2006**
(21) Numéro de dépôt: 02799832.7
(22) Date de dépôt: 19.12.2002
(51) Int. Cl.: F01N 1/08, F01N 1/16, F01N 1/24, F16L 55/033, B25D 17/12, F16L 55/02, F24F 13/24, F01N 1/10

(54) **DIFFUSEUR SILENCIEUX POUR LA DETENTE DE GAZ**
SCHALLDÄMPFERDIFFUSOR FÜR ABGASEXPANSION
SILENT GAS EXPANSION DIFFUSER

(30) Priorité: 27.12.2001 FR 0116931
(43) Date de publication de la demande: 29.09.2004
(73) Titulaire: Societe d'Acoustique Industrielle, 91882 Massy Cedex (FR)
(72) Inventeur: GERARD, Philippe, Grégoire, F-78113 Adainville (FR)
(74) Mandataire: Bérogin, Francis
(86) Numéro de dépôt international: PCT/FR2002/004455
(87) Numéro de publication internationale: WO 2003/056147

(56) Documents cités:
- EP-A- 0 565 136
- DE-A- 1 480 406
- DE-B- 1 294 393
- FR-A- 2 518 714
- US-A- 2 745 509
- US-A- 3 561 561
- US-A- 5 109 950

## Description

La présente invention concerne un diffuseur silencieux pour la détente d'un gaz comprimé, du type comportant un tube d'amenée du gaz à détendre, une enveloppe allongée contenant une garniture d'un matériau d'amortissement acoustique tel qu'un tricot métallique ou analogue, une extrémité de cette enveloppe allongée communiquant avec ledit tube d'amenée par une série de trous, et son extrémité opposée s'ouvrant à l'extérieur pour l'échappement du gaz détendu, de sorte que ledit gaz traverse lesdits trous à vitesse sonique et que sa vitesse en amont soit maintenue à un niveau subsonique, de même qu'à l'intérieur de l'enveloppe.

De tels diffuseurs sont déjà connus et sont utilisés par exemple pour détendre de l'air comprimé chaud avant son injection à l'entrée d'une machine telle qu'une turbine à gaz ou un compresseur, pour empêcher le givrage à l'entrée de la machine, notamment au niveau du filtre d'entrée d'air. Leur constitution est telle qu'ils limitent de façon très importante les émissions sonores qui autrement seraient provoquées par la détente brutale du gaz sous pression.

Dans le diffuseur connu par EP 0404 801 du type mentionné plus haut, la série de trous assurant la communication entre le tube et l'enveloppe est prévue dans une plaque perforée transversale maintenue entre un épaulement interne du tube et l'extrémité correspondante de l'enveloppe, laquelle est obturée par cette plaque, sans être pénétrée par le tube. Le tube et la plaque perforée sont donc des pièces usinées d'un prix relativement élevé, ce qui constitue un inconvénient, outre que l'efficacité de ces diffuseurs n'est pas optimale en tant que silencieux.

Le but de la présente invention est d'éviter cet inconvénient et de rendre les diffuseurs du genre en question plus efficaces que le diffuseur du type défini plus haut tout en étant plus simples et moins onéreux à fabriquer.

A cet effet, un diffuseur silencieux conforme à l'invention, selon le préambule de la revendication 1, et connu par US-A-5 109 950, se caractérise par les mesures techniques de la partie caractérisante de la revendication 1.

Grâce à cette structure et comme on le verra mieux dans ce qui suit, le gaz à détendre emprunte, depuis son entrée dans le tube jusqu'à sa sortie de l'enveloppe, un parcours acoustique à chicanes propre à augmenter l'effet de réduction du bruit qu'il subit dans la garniture d'amortissement acoustique, puisque pouvant présenter deux coudes : un premier coude au niveau de la traversée du tube lorsque le gaz pénètre dans l'enveloppe et, si l'on prévoit, comme cela est connu en soi, une sortie latérale du gaz hors de l'enveloppe, un second coude lorsqu'il quitte l'enveloppe pour s'échapper à l'extérieur, du fait que le parcours du gaz dans l'enveloppe est parallèle au tube.

On évite par ailleurs la présence de la plaque perforée, et on limite les opérations d'usinage à l'élaboration des trous dans le tube, qui peut être un simple tube du commerce, et à celle, facultative, d'ouvertures d'échappement dans l'enveloppe, le tube pouvant être assujetti à l'enveloppe par une simple opération de soudage sur la paroi frontale de l'enveloppe qui est traversée par le tube.

Bien entendu, en outre, il sera très facile de fixer, par l'extrémité libre de leur tube d'entrée, qui peut être filetée, de tels diffuseurs sur des rampes de distribution portant plusieurs diffuseurs convenablement répartis pour assurer à l'entrée de la machine dans laquelle il convient d'éviter tout givrage, la formation d'un rideau homogène d'air chaud ou autre gaz détendu (vapeur, CO₂. ou autre selon l'application).

Deux modes d'exécution de l'invention vont maintenant être décrits à titre d'exemples nullement limitatifs avec référence aux figures du dessin ci-annexé dans lequel :
- la figure 1 est une vue en coupe axiale d'un diffuseur silencieux conforme à l'invention ;
- la figure 2 montre un exemple de disposition des trous à l'entrée du tube ; et
- la figure 3 montre en perspective l'application de l'invention à l'insonorisation *a posteriori* d'un tube d'échappement préexistant, par exemple une soupape.

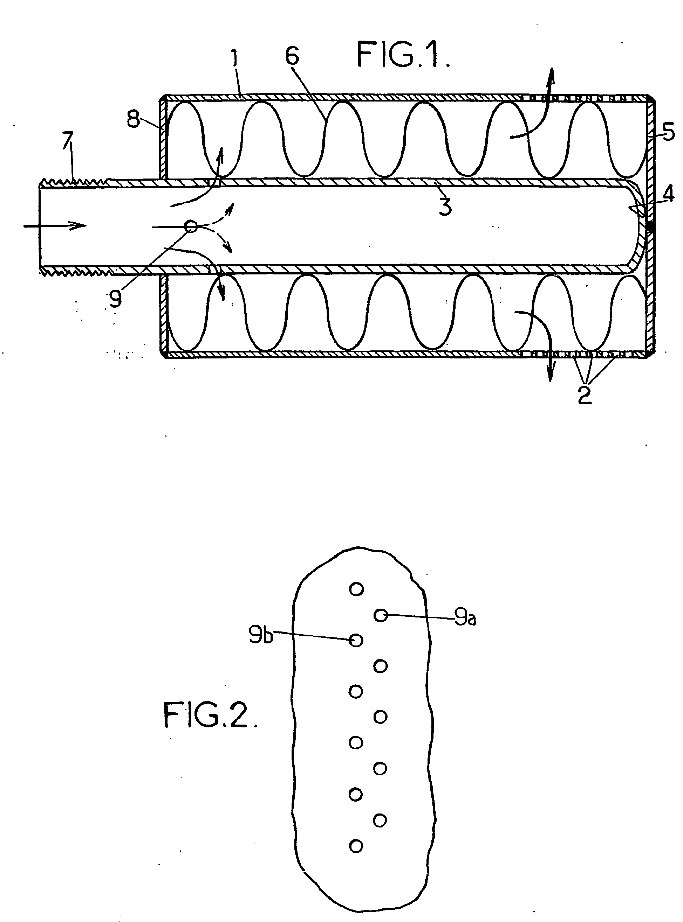

Le diffuseur de la figure 1 comporte une enveloppe tubulaire allongée 1 en tôle, comportant à son extrémité d'éjection du gaz détendu une section perforée constituée d'une série d'ouvertures 2 disposées sur toute sa périphérie, par exemple suivant un schéma de répartition en quinconce. La longueur axiale de cette section perforée pourra être de l'ordre de 20 % de la longueur totale de l'enveloppe. La section cumulée des ouvertures 2, chacune d'un diamètre qui peut aller jusqu'à 5 mm, est telle que la vitesse d'éjection des gaz hors de l'enveloppe 1 soit faible, de l'ordre de 50 m/s, cette section cumulée pouvant être de l'ordre de 30 % de la surface totale de cette partie de l'enveloppe.

La partie centrale de cette enveloppe 1 est occupée sur toute sa longueur par un tube coaxial 3 du commerce, dont l'extrémité 4, située contre une première plaque de fermeture soudée 5 de l'enveloppe 1, est fermée. L'espace annulaire ainsi ménagé dans l'enveloppe 1 autour du tube 3 contient une garniture 6 d'un matériau d'amortissement acoustique constitué d'un genre de tricot métallique enroulé serré sur le tube 3. L'extrémité ouverte du tube 3 opposée à son extrémité fermée 4 et par laquelle arrive le gaz à détendre fait saillie à l'extérieur de l'enveloppe 1 et peut être filetée en 7 pour permettre commodément sa fixation sur une rampe de distribution ou analogue, non représentée. De même qu'à son extrémité 4, ce tube 3 peut être soudé à une seconde plaque de fermeture 8 de l'enveloppe 1. Enfin, le tube 3 est pourvu, immédiatement en aval de son entrée dans l'enveloppe, d'une série de trous de faible diamètre 9 constituant ensemble un col sonique et répartis; selon le débit de gaz à évacuer, par exemple en deux rangées alternées 9a et 9b de trous d'un diamètre inférieur à 5 mm, comme montré sur la figure 2.

Grâce à ces dispositions, on obtient un diffuseur silencieux de faible encombrement, facile à fabriquer avec des éléments métalliques du commerce découpés et soudés, et pratiquement sans usinage, donc à faible coût. On obtient une atténuation du bruit de l'ordre de 20 à 45 dbA par rapport à un échappement libre, et ceci pour un débit de gaz éventuellement chaud pouvant aller jusqu'à 400 g/s.

Le col sonique formé par les trous 9 permet de bloquer les conditions du débit de fonctionnement dans l'enveloppe 1 à celles qui règnent en amont, au point de vue température et pression, la pression dans la rampe d'amenée pouvant être par exemple de 6 ou 7 bars (dans la limite hàute et sous réserve de la bonne tenue mécanique), avec une vitesse d'écoulement également subsonique.

Ce col permet en effet de décaler vers les très hautes fréquences, plus faciles à traiter acoustiquement, le spectre basse fréquence du jet d'entrée, les ondes de choc étant "cassées" par le tricot métallique dans l'enveloppe, et l'écoulement du gaz y étant ainsi stabilisé et rendu moins bruyant A la sortie, l'écoulement gazeux est homogène et à vitesse réduite, ce qui permet de limiter les disparités dans la directivité du bruit. Le faible diamètre des trous d'échappement (< 5mm) est essentiel, car il permet de limiter au maximum les risques liés au "défibrage" du tricot métallique, c'est-à-dire à l'arrachage de ses fibres.

Il va de soi que l'embout fileté à l'extrémité ouverte du tube pourrait être remplacé par un embout à souder sur la rampe de répartition, toute autre modification de détail pouvant de toute façon être apportée au mode de réalisation qui vient d'être décrit à titre d'exemple nullement limitatif, dès lors qu'elle ne sortirait pas du cadre des revendications.

On comprend aussi que la section perforée des ouvertures de sortie 2 pourrait être supprimée et remplacée par une simple ouverture plus grande dans l'enveloppe 1, par exemple au bout de l'enveloppe.

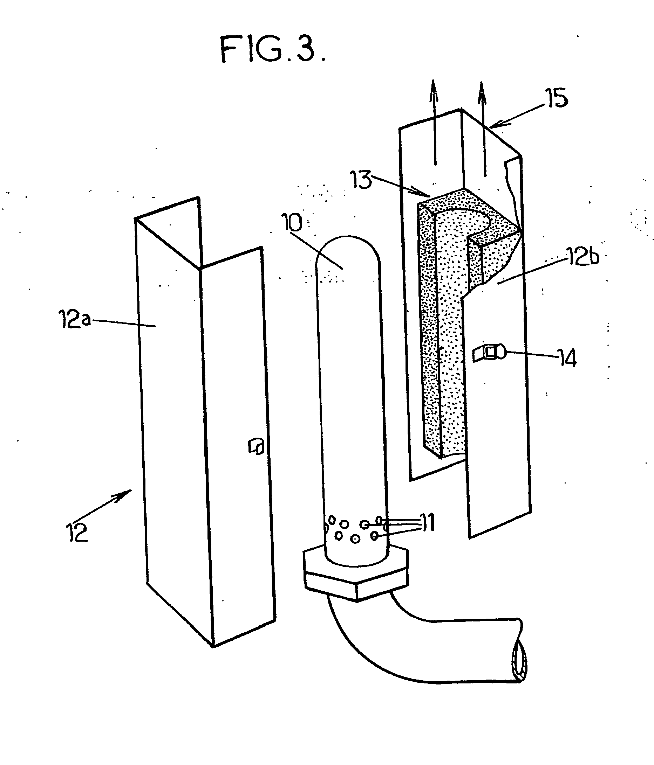

C'est le cas dans le mode de réalisation de la figure 3, dans laquelle on a représenté l'invention appliquée à l'insonorisation *a posteriori* d'un tube 10 d'éjection de gaz comprimé chaud ou froid préexistant, comportant des trous de sortie 11 constituant le col sonique. On peut alors entourer un tel tube, par exemple une soupape de purge d'air comprimé déjà en place et non démontable, par une enveloppe 12 constituée de deux demi coquilles 12a, 12b assemblées l'une à l'autre et enserrant entre elles et le tube 10 une garniture 13 d'un matériau d'amortissement acoustique tel qu'un tricot métallique ou analogue, la fermeture de l'enveloppe pouvant être assurée par tout moyen connu, comme des genouillères 14.

Le gaz détendu silencieusement s'échappe alors à l'atmosphère par l'ouverture correspondant à la section de sortie 15 laissée libre au bout de l'enveloppe, ceci avec les mêmes avantages que précédemment. Les performances acoustiques restent comprises entre 20 et 45 dbA d'atténuation selon la géométrie de la boîte, la section de passage, la sortie latérale ou non de l'ouverture de sortie, *etc*.

## Revendications

1. Diffuseur silencieux pour la détente d'un gaz comprimé, du type comportant un tube (3, 10) d'amenée du gaz à détendre, qui s'étend centralement dans une enveloppe tubulaire allongée (1,12) jusqu'à une extrémité fermée (4) dudit tube (3,10) à l'opposé de l'autre extrémité ouverte dudit tube (3,10) pour l'entrée du gaz à détendre dans le diffuseur, une garniture (6,13) d'un matériau d'amortissement acoustique étant disposée dans l'espace annulaire qui s'étend entre ladite enveloppe tubulaire (1,12) et ledit tube (3,10) et communique avec l'intérieur dudit tube (3,10) par une série de trous (9,11) de faible diamètre ménagés directement dans la paroi dudit tube (3,10) pour le passage du gaz de l'intérieur dudit tube (3,10) audit espace annulaire, d'où le gaz s'échappe par une extrémité d'éjection de gaz de ladite enveloppe tubulaire (1,12) vers l'extérieur, **caractérisé en ce que** ladite série de trous (9,11) est prévue uniquement immédiatement en aval de l'entrée dudit tube (3,11) dans ladite enveloppe tubulaire (1,12), ladite garniture (6,13) occupant tout le volume dudit espace annulaire en étant serrée sur ledit tube (3,10) qui s'étend sur toute la longueur de ladite enveloppe (1,12).

2. Diffuseur selon la revendication 1, **caractérisé en ce que** le diamètre des trous (9, 11) est inférieur à 5 mm.

3. Diffuseur selon l'une quelconque des revendications 1 et 2 précédentes, **caractérisé en ce que** lesdits trous (9,11) dudit tube (3,10) sont répartis en rangées alternées de trous (9a,9b).

4. Diffuseur selon l'une quelconque des revendications 1 à 3 précédentes, **caractérisé en ce que** ladite garniture (6,13) du matériau d'amortissement acoustique est constituée d'un genre de tricot métallique enroulé serré sur le tube (3,10).

5. Diffuseur selon l'une quelconque de revendications 1 à 4 précédentes, **caractérisé en ce que** l'extrémité ouverte dudit tube (3 10) fait saillie à l'extérieur de ladite enveloppe (1) et porte un filetage (7) permettant la fixation du diffuseur sur une rampe de distribution.

6. Diffuseur selon l'une quelconque des revendications 1 à 5 précédentes, **caractérisé en ce que** ladite enveloppe tubulaire allongée (1) comporte à son extrémité d'éjection de gaz détendu, une section perforée présentant une série d'ouvertures (2) d'échappement du gaz détendu, disposée sur toute sa périphérie, par exemple suivant une répartition en quinconce, et telle que la section cumulée (2) desdites ouvertures (2) d'échappement est notablement supérieure à la section cumulée desdits trous (9) dans ledit tube (3).

7. Diffuseur selon la revendication 6, **caractérisé en ce que** la longueur axiale de ladite section perforée de ladite enveloppe tubulaire allongée (1) peut atteindre de l'ordre de 20% de la longueur totale de ladite enveloppe (1), chacune desdites ouvertures (2) d'échappement étant d'un diamètre pouvant atteindre 5 mm.

8. Diffuseur selon l'une quelconque des revendications 6 et 7 précédentes, **caractérisé en ce que** la section cumulée desdites ouvertures (2) d'échappement peut être de l'ordre de 30% de la surface totale de ladite section perforée de ladite enveloppe (1) et est telle que la vitesse d'éjection du gaz hors de ladite enveloppe (1) est faible, de l'ordre de 50 m/s.

9. Diffuseur selon l'une quelconque des revendications 1 à 5 précédentes, **caractérisé en ce que** ledit tube (10) d'amenée de gaz à détendre est entouré de ladite enveloppe (12) constituée de deux demi coquilles (12a,12b) assemblées l'une à l'autre et enserrant entres elles et ledit tube (10) ladite garniture (13) du matériau d'amortissement acoustique, la fermeture de ladite enveloppe (12) pouvant être assurée par tout moyen connu (14).

10. Diffuseur selon la revendication 9, **caractérisé en ce que** le gaz détendu s'échappe à l'extérieur par une simple ouverture correspondant à la section de sortie (15) laissée libre au bout de ladite enveloppe (12), du côté de ladite extrémité fermée dudit tube (10).

## Claims

1. Silencer for the expansion of a compressed gas, of the type comprising a tube (3, 10) for the passage of the gas to be expanded which extends centrally in an elongated tubular envelope (1, 12) as far as a closed end (4) of said tube (3, 10) opposite the other open end of said tube (3, 10) for the admission into the silencer of the gas to be expanded, a filling (6, 13) made of an acoustic damping material being disposed in the annular gap which extends between said tubular envelope (1, 12) and said tube (3, 10) and communicates with the inside of said tube (3, 10) through a series of holes (9, 11) of small diameter arranged directly in the wall of said tube (3, 10) for the passage of the gas inside said tube (3', 10) to said annular gap, from where the gas escapes outside through a gas ejection end of said tubular envelope (1, 12), **characterised in that** said series of holes (9, 11) is immediately provided solely downstream of the entry of said tube (3, 11) in said tubular envelope (1, 12), said filling (6, 13) taking up the entire volume of said annular gap and being compressed against said tube (3, 10) which extends over the entire length of said envelope (1, 12).

2. Silencer according to claim 1, **characterised in that** the diameter of the holes (9, 11) is less than 5 mm.

3. Silencer according to any one of the preceding claims 1 and 2, **characterised in that** said holes (9, 11) of said tube (3, 10) are distributed in alternating rows of holes (9a, 9b).

4. Silencer according to any one of the preceding claims, **characterised in that** said filling (6, 13) made of acoustic damping material comprises a type of coiled, knitted metal element tightly wound round the tube (3, 10).

5. Silencer according to any one of the preceding claims 1 to 4, **characterised in that** the open end of said tube (3, 10) projects outside of said envelope (1) and has a thread (7) allowing the fixing of the silencer to a distribution ramp.

6. Silencer according to any one of the preceding claims 1 to 5, **characterised in that** said elongated tubular envelope (1) comprises on its expanded gas ejection end a perforated section having a series of orifices (2) for the escape of the expanded gas, disposed over its entire periphery, for example in staggered rows, and in such a manner that the cumulative cross-section (2) of said escape orifices (2) is notably higher than the cumulative cross-section of said holes (9) in said tube (3).

7. Silencer according to claim 6, **characterised in that** the axial length of said perforated section of said elongated tubular envelope (1) can represent about 20% of the total length of said envelope (1), each of said escape orifices (2) being up to 5 mm in diameter.

8. Silencer according to any one of the preceding claims 6 and 7, **characterised in that** the cumulative cross-section of said escape orifices (2) can represent about 30% of the total surface of said perforated section of said envelope (1) and is such that the speed of ejection of the gas outside said envelope (1) is low, namely in the region of 50 m/s.

9. Silencer according to any one of the preceding claims 1 to 5, **characterised in that** said tube (10) for the passage of gas to be expanded is surrounded by said envelope (12) comprising two half shells (12a, 12b) fixed to one other and enclosing between them and said tube (10) said filling (13) made of acoustic damping material, the closure of said envelope (12) being ensured by any known means (4).

10. Silencer according to claim 9, **characterised in that** the expanded gas escapes outside through a single orifice corresponding to the exit section (15) left free at the end of said envelope (12) on the side of the closed end of said tube (10).

## Patentansprüche

1. Schalldämpferdiffusor zur Druckminderung eines komprimierten Gases des Typs mit einem Zuleitungsrohr (3, 10) für das druckzumindernde Gas, welches sich mittig in einer länglichen, rohrförmigen Hülle (1, 12) bis zu einem geschlossenen Ende (4) dieses Rohrs (3, 10) erstreckt, das entgegengesetzt zu dem anderen, offenen Ende dieses Rohrs (3, 10) für den Einlass des in dem Diffusor druckzumindernden Gases liegt, wobei eine Einlage (6, 13) eines Schalldämpfungsmaterials in dem ringförmigen Zwischenraum angeordnet ist, der sich zwischen dieser rohrförmigen Hülle (1, 12) und diesem Rohr (3, 10) befindet und mit dem Inneren dieses Rohrs (3, 10) durch eine Reihe von Löchern (9, 11) mit geringem Durchmesser kommuniziert, die direkt in der Wandung dieses Rohrs (3, 10) ausgeführt sind, um den Durchgang des Gases vom Inneren dieses Rohrs (3, 10) zu diesem ringförmigen Zwischenraum zu ermöglichen, von dem aus das Gas an einem Gasausstoßende der rohrförmigen Hülle (1, 12) nach außen entweicht,
**dadurch gekennzeichnet,**
**dass** diese Reihe von Löchern (9, 11) nur unmittelbar hinter dem Einlass dieses Rohrs (3, 10) in dieser rohrförmigen Hülle (1, 12) vorgesehen ist, wobei die Einlage (6, 13) das gesamte Volumen des genannten ringförmigen Zwischenraums einnimmt, indem es fest auf dem Rohr (3, 10) sitzt, das sich über die gesamte Länge dieser Hülle (1, 12) erstreckt.

2. Diffusor nach Anspruch 1,
**dadurch gekennzeichnet,**
**dass** der Durchmesser der Löcher (9, 11) weniger als 5 mm beträgt.

3. Diffusor nach einem der Ansprüche 1 und 2,
**dadurch gekennzeichnet,**
**dass** die Löcher (9, 11) des Rohrs (3, 10) in abwechselnden Reihen von Löchern (9a, 9b) verteilt angeordnet sind.

4. Diffusor nach einem der Ansprüche 1 bis 3,
**dadurch gekennzeichnet,**
**dass** die Einlage (6, 13) des Schalldämpfungsmaterials aus einer Art Metallmaschengewebe besteht, das fest auf das Rohr (3, 10) aufgewickelt ist.

5. Diffusor nach einem der Ansprüche 1 bis 4,
**dadurch gekennzeichnet,**
**dass** das offene Ende des Rohrs (3, 10) aus der Hülle (1) hervorragt und ein Gewinde (7) trägt, das die Befestigung des Diffusors an einer Zuleitungsrampe ennöglicht.

6. Diffusor nach einem der Ansprüche 1 bis 5,
**dadurch gekennzeichnet,**
**dass** diese längliche, rohrförmige Hülle (1) an ihrem Ausstoßende für druckgemindertes Gas einen perforierten Abschnitt enthält, der eine Reihe von Ausstoßöffnungen (2) für das druckgeminderte Gas aufweist, die auf ihrem gesamten Außenumfang angeordnet sind, beispielsweise in einer zickzackförmigen Verteilung, und zwar dergestalt, dass die Querschnittsumme dieser Ausstoßöffnungen (2) beträchtlich größer ist als die Querschnittsumme der Löcher (9) in dem Rohr (3).

7. Diffusor nach Anspruch 6,
**dadurch gekennzeichnet,**
**dass** die axiale Länge dieses perforierten Abschnitts der länglichen, rohrförmigen Hülle (1) bis zu einer Größenordnung von 20 % der Gesamtlänge dieser Hülle (1) betragen kann, wobei der Durchmesser jeder dieser Ausstoßöffnungen (2) bis zu 5 mm betragen kann.

8. Diffusor nach einem der Ansprüche 6 und 7,
**dadurch gekennzeichnet,**
**dass** die Querschnittsumme dieser Ausstoßöffnungen (2) sich in einer Größenordnung von 30 % der Gesamtfläche dieses perforierten Abschnitts der Hülle (1) bewegen kann und dergestalt vorgesehen ist, dass die Ausstoßgeschwindigkeit des Gases aus der Hülle (1) gering ist, in der Größenordnung von 50 m/s liegt.

9. Diffusor nach einem der Ansprüche 1 bis 5,
**dadurch gekennzeichnet,**
**dass** das Zuleitungsrohr (10) für druckzuminderndes Gas von der Hülle (12) umgeben ist, welche aus zwei aneinandergesetzten Halbschalen (12a, 12b) gebildet ist, die zwischen sich und diesem Rohr (10) die Einlage (13) des Schalldämpfungsmaterials festklemmen, wobei das Verschließen dieser Hülle (12) durch jedes beliebige bekannte Mittel (14) gewährleistet werden kann.

10. Diffusor nach Anspruch 9,
**dadurch gekennzeichnet,**
**dass** das druckgeminderte Gas durch eine einfache Öffnung, die dem Austrittsquerschnitt (15) entspricht, der am Ende dieser Hülle (12) an der Seite des genannten geschlossenen Endes des Rohrs (10) frei gelassen ist, nach außen entweicht.
